# EUROPÄISCHE PATENTANMELDUNG

(11) **EP 3 236 553 A1**
(43) Veröffentlichungstag der Anmeldung: **25.10.2017**
(21) Anmeldenummer: 16166214.3
(22) Anmeldetag: 20.04.2016
(51) Int. Cl.: H02H 3/26, H02H 7/08, H02H 11/00, H02P 8/12

(54) **VERFAHREN UND VORRICHTUNG ZUR ERKENNUNG VON PHASENAUSFÄLLEN, INSBESONDERE NETZFEHLERN, BEI EINEM UMRICHTER**

(71) Anmelder: Siemens Aktiengesellschaft, 80333 München (DE)
(72) Erfinder: Benesch, Norbert, 90562 Heroldsberg (DE)

(57) **Zusammenfassung**

Die Erfindung ist ein Verfahren und eine korrespondierende Vorrichtung zur Erkennung von Phasenausfällen bei einem Umrichter (10), wobei zur Stromregelung des Umrichters (10) einerseits Stromregler (26, 28) eines Mitsystems (20) und andererseits Stromregler (40, 42) eines Gegensystems (22) vorgesehen sind, wobei die Stromregler (26, 28) des Mitsystems (20) und die Stromregler (40, 42) des Gegensystems (22) jeweils Integratoren (50, 52; 54, 56) aufweisen, wobei im Falle eines Netzfehlers eine Verkopplung der Integratoren (50, 52; 54, 56) resultiert, wobei zumindest eine Mess- oder Rechengröße mittels einer Überwachungseinheit (64) auf einen für die Verkopplung der Integratoren (50, 52; 54, 56) typischen Verlauf geprüft wird und wobei die Überwachungseinheit (64) im Falle einer Erkennung eines solchen typischen Verlaufs ein Fehlersignal (66) generiert.

## Beschreibung

Die Erfindung betrifft ein Verfahren und eine Vorrichtung zur Erkennung von Phasenausfällen, insbesondere Phasenausfällen in Form von Netzfehlern, bei einem Umrichter, insbesondere bei einem an ein speisendes Netz angeschlossenen Umrichter.

Zum Schutz teurer Werkstücke während des Fertigungsprozesses in einer Werkzeugmaschine sollen Phasenausfälle, insbesondere Netzphasenausfälle, schnell und zuverlässig erkannt werden und die Anlage soll auf Basis einer solchen Erkennung zum Beispiel in einen sicheren Betriebszustand gebracht werden. Auf diese Weise soll das momentan zum Beispiel in einer mehrachsigen Dreh- / Fräsmaschine bearbeitete Werkstück vor einer Beschädigung durch ungewollte / unkoordinierte Bewegung der Maschinenachsen aufgrund einer einbrechenden Energieversorgung geschützt werden. Weil der Wert bearbeiteter Werkstücke mitunter im sechsstelligen oder sogar im siebenstelligen Bereich liegt, rechtfertigt sich ein hoher Aufwand für den Schutz solcher Werkstücke.

Der im Folgenden beschriebene Ansatz kommt zur Verwendung bei Werkzeugmaschinen, insbesondere spanabhebenden Werkzeugmaschinen, und sonstigen Produktionsmaschinen in Betracht. Als Werkzeugmaschine werden bekanntlich alle Maschinen bezeichnet, die u.a. im Maschinenbau und im Werkzeugbau zur Bearbeitung von Werkstücken mit Werkzeugen dienen. Demgegenüber ist ein Industrieroboter eine universelle, programmierbare Produktionsmaschine, die neben einer Bearbeitung von Werkstücken alternativ auch zur Handhabung von Werkstücken und für Montagezwecke bestimmt und eingerichtet ist. Hier und im Folgenden wird der Ausdruck Werkzeugmaschine als Oberbegriff für Begriffe wie Werkzeugmaschine, Produktionsmaschine, Industrieroboter und dergleichen verwendet.

Bei Verdacht auf einen drohenden Netzausfall oder eine Netzstörung sollen rechtzeitig vorbeugende Rückzugsbewegungen der Maschinenachsen einer Werkzeugmaschine eingeleitet werden. Das Gesamtkonzept der Werkzeugmaschine muss auf diese Anforderung abgestimmt sein. Hersteller von Werkzeugmaschinen fordern entsprechende Funktionen von den integrierten Antriebs- und Steuerungsgeräten.

Als dynamischer und rückspeisefähiger Netzwechselrichter wird in solchen Anwendungen typisch ein selbstgeführter Stromrichter in IGBT-Brückenschaltung eingesetzt. Der Stromrichter regelt die Zwischenkreisspannung des Antriebsverbands und prägt (z.B. mit Hilfe einer Pulsweitenmodulation - PWM) sinusförmige Netzströme ein, die zu dem benötigten Leistungsfluss zum Netz führen. Um die pulsfrequenten Anteile der Stromrichter-Ausgangsspannung von Netzteilnehmern fern zu halten, werden Netzfilter eingesetzt, die typischerweise Induktivitäten und mindestens eine Kapazität im Filterzweig beinhalten. Typisch wird der Stromrichter so geregelt, dass der Blindleistungsbedarf am Anschlusspunkt des Filters nahezu null wird, also - abgesehen von den höherfrequenten Verzerrungsanteilen - reiner Wirkstrom mit dem Netz ausgetauscht wird (Verschiebungsfaktor cos ϕ=1). Der Blindleistungsbedarf des Kondensators im Netzfilter wird dazu vom Stromrichter bereitgestellt.

Der vergleichsweise häufig vorkommende Fall eines Einbruchs der Netzspannung oder eines Kurz- oder Erdschlusses braucht im Folgenden nicht betrachtet zu werden, denn die damit verbundene große Spannungsdifferenz zwischen Wechselrichter und eingebrochener Netzspannung führt zu einem großen Strom, der einfach detektiert werden kann. Daneben sind große Änderungen der Spannungsamplitude mit Spannungserfassungen und/oder Modellrechnungen der Anschlussspannung einfach detektierbar.

Eine andere Situation liegt demgegenüber bei einem hochohmigen Ausfall einer Netzphase vor. Typisches Beispiel hierfür ist das Auslösen einer Sicherung in einer Netzphase. Die Spannung der fehlenden Netzphase wird durch den Kondensator des zum Betrieb des Stromrichters erforderlichen Netzfilters gehalten und nachgebildet. Speziell im unbelasteten Zustand (Leerlauf) wird damit die Erkennung eines hochohmigen Netzausfalls zu einem Problem, für das hier eine Lösung vorgeschlagen wird. Auf Basis der damit möglichen Erkennung eines hochohmigen Netzausfalls kann zum Beispiel in der Werkzeugmaschine der Start eines Bearbeitungsschritts verhindert werden, wenn bereits zuvor eine Zweig-Sicherung gefallen war.

Der hochohmige Ausfall von mehr als einer Netzphase ist - wegen unterbrochenem Energiefluss des 3-Leiter-Anschlusses - wiederum trivial und wird daher hier nicht betrachtet. Beispielsweise könnte eine solche Situation am unterbrochenen Stromfluss oder an der sich sprunghaft ändernden Spannung am Netzfilter erkannt werden.

Obwohl der hier vorgestellte Ansatz am Beispiel einer netzseitigen Anwendung eines Pulswechselrichters erläutert wird, ist dieser auch auf motorseitige Wechselrichter mit Sinus-Ausgangsfilter (mit Längsinduktivität und Querkapazität) übertragbar. Die Topologie sowie die Regelungsverfahren können prinzipiell gleichermaßen angewendet werden, lediglich der Block "Netz" ist durch einen elektrischen Motor, insbesondere einen Synchronmotor, zu ersetzen. Dies erklärt sich aufgrund des Umstands, dass Netze typisch mit Hilfe elektrischer Generatoren gebildet werden, so dass auch im Fall eines Netzwechselrichters der Block "Netz" aus einer elektrischen Maschine bestehen kann.

Eine Aufgabe der vorliegenden Erfindung besteht darin, ein Verfahren zur Erkennung von Phasenausfällen anzugeben, insbesondere Phasenausfällen in Form von im Folgenden kurz als Netzfehler bezeichneten einphasigen Netzphasen-Unterbrechungen, insbesondere zur Erkennung von Netzfehlern im Leerlauf-Betrieb oder im Teillast-Betrieb, von aktiven Netzwechselrichtern mit Netzfiltern.

Diese Aufgabe wird erfindungsgemäß mittels eines Verfahrens mit den Merkmalen des Anspruchs 1 sowie mittels einer Vorrichtung mit den Merkmalen des parallelen Vorrichtungsanspruchs gelöst.

Bei dem Verfahren zur Erkennung von Phasenausfällen bei einem Umrichter, insbesondere Netzfehlern, nämlich einphasigen Netzphasen-Unterbrechungen, bei einem an ein speisendes Netz angeschlossenen Umrichter, sind zur Stromregelung des Umrichters einerseits Stromregler eines Mitsystems und andererseits Stromregler eines Gegensystems vorgesehen, wobei sowohl die Stromregler des Mitsystems wie auch die Stromregler des Gegensystems jeweils Integratoren oder Intergralanteile aufweisen. Das Mitsystem und das Gegensystem sind so ausgeführt, dass die Integratoren der jeweiligen Stromregler normalerweise, also ohne Netzstörung, entkoppelt sind. Im Falle eines Netzfehlers resultiert eine Verkopplung der bisher entkoppelten Integratoren und somit eine gewollte Instabilität. Aufgrund dieser Instabilität ergibt sich für unterschiedliche Mess- oder Rechengrößen ein für die Verkopplung der Integratoren und damit für den zugrunde liegenden Netzfehler typischer Verlauf. Der Verlauf der oder jeder jeweils betrachteten Mess- oder Rechengröße wird mittels einer Überwachungseinheit geprüft und die Überwachungseinheit erkennt einen für einen Netzfehler typischen Verlauf der jeweiligen Mess- oder Rechengröße. Ein Beispiel für eine zur Erkennung eines Netzfehlers in Frage kommende Mess- oder Rechengröße sind die Absolutwerte der Integratoren der Stromregler des Gegensystems. Im Falle einer Erkennung eines solchen für einen Netzfehler typischen Verlaufs generiert die Überwachungseinheit ein Fehlersignal, so dass Bedienpersonal auf die Fehlersituation aufmerksam wird und/oder eine automatische Reaktion auf den Netzfehler, zum Beispiel in Form eines Abschaltens der Werkzeugmaschine, möglich wird.

Eine zur Ausführung des Verfahrens bestimmte und eingerichtete Vorrichtung zur Erkennung von Phasenausfällen bei einem Umrichter, insbesondere Netzfehlern bei einem an ein speisendes Netz angeschlossenen Umrichter, umfasst zur Stromregelung des Umrichters einerseits Stromregler eines Mitsystems und andererseits Stromregler eines Gegensystems, wobei die Stromregler des Mitsystems und die Stromregler des Gegensystems jeweils Integratoren oder Integralanteile aufweisen. Das Mitsystem und das Gegensystem sind - wie oben bereits erwähnt - so ausgeführt, dass die Integratoren der jeweiligen Stromregler normalerweise, also ohne Netzstörung, entkoppelt sind. Im Falle eines Netzfehlers resultiert dagegen eine Verkopplung der Integratoren und mittels einer Überwachungseinheit ist ein für die Verkopplung der Integratoren typischer Verlauf zumindest einer Mess- oder Rechengröße detektierbar. Mittels der Überwachungseinheit ist des Weiteren im Falle einer Erkennung eines solchen typischen Verlaufs auch ein Fehlersignal generierbar, das zum Beispiel für automatische Reaktionen auf die erkannte Fehlersituation auswertbar ist.

Der Vorteil der Erfindung besteht darin, dass Phasen- oder Netzfehler der eingangs genannten Art, die sich typischerweise aufgrund eines Ausfalls einer Netzsicherung ergeben, schon vor Beginn eines Produktionszyklus detektiert werden können und auf dieser Basis eine rechtzeitige Warnung oder ein Abschalten einer an den Netzwechselrichter angeschlossenen Maschine, zum Beispiel einer Werkzeugmaschine, möglich ist. Bei einer an den Netzwechselrichter angeschlossenen Werkzeugmaschine lässt sich so wirksam eine Beschädigung von Werkstücken vermeiden, die anderenfalls durch abgebrochene Fertigungsprozesse entstehen kann.

Weiter vorteilhaft wird bei der Anwendung des hier beschriebenen Ansatzes der normale Betrieb des Netzwechselrichters für die Fehlererkennung nicht unterbrochen oder mit Testsignalen gestört, wie dies ansonsten zur Vermeidung von Rückwirkungen auf die Netzspannung notwendig ist. Wartezeiten im Fertigungsprozess fallen damit nicht an. Das vorgeschlagene Verfahren ist darüber hinaus grundsätzlich auf die Phasenausfallerkennung bei Motorwechselrichtern mit Sinus-Ausgangsfilter übertragbar.

Weitere Vorteile der Erfindung sind eine kurze Erkennungszeit, typischerweise ist mittels des hier vorgeschlagenen Ansatzes ein Netzfehler in weniger als einer Sekunde detektierbar, und vernachlässigbar geringe Auswirkungen auf die Stabilität und Robustheit der üblichen Strom- und Zwischenkreisspannungsregelung. Dies ist vor allem dadurch bedingt, dass sich keine störenden Netzwirkungen durch eine Ausgabe von Testsignalen oder dergleichen ergeben, die sonst häufig für aktive Detektionsverfahren benötigt werden. Das Verfahren ist robust und zuverlässig und ermöglicht eine sichere Detektion ohne Fehlauslösungen auch bei Vorliegen von Netzspannungs-Oberschwingungen oder Netzimpedanz-Änderungen. Schließlich ist das Verfahren universell anwendbar, also sowohl bei "kleinen" Wechselrichtern im kW-Bereich wie auch bei "großen" Wechselrichtern im MW-Bereich mit/ohne Spannungsmessung im Netzfilter und unterschiedlichen Filtertopologien. Auch der geringe Rechenzeitbedarf des Verfahrens macht dieses im Booksize-Umfeld in Mehrachsverbänden bei Werkzeugmaschinen ohne Einschränkung der maximalen Achszahl je Control-Unit anwendbar.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist. Schließlich ist darauf hinzuweisen, dass das hier angegebene Verfahren auch entsprechend der abhängigen Vorrichtungsansprüche weitergebildet sein kann und umgekehrt.

Bei einer Ausführungsform des Verfahrens sind zur Begrenzung des Anstiegs der Integratoren des Gegensystems Begrenzungsblöcke im Gegensystem vorgesehen. Mittels der Begrenzungsblöcke kann der Ausgang der Gegensystem-Regelung so begrenzt werden, dass ein Durchfahren der Störung, insbesondere der Netzstörung, möglich wird, aber ein sicheres Erkennen gewährleistet bleibt.

Bei einer weiteren Ausführungsform des Verfahrens ist vorgesehen, dass das Gegensystem nicht dauerhaft aktiv ist und bei Bedarf abhängig von einer mittleren Leistungsaufnahme des Umrichters, zum Beispiel nur im Leerlauf oder bei Teillast, aktiviert wird. Dies trägt dem Umstand Rechnung, dass bei genügend großen Netzströmen ein Netzfehler in Form einer Phasentrennung auch auf anderem Wege erkennbar ist, zum Beispiel anhand der Schwingungsanteile bei doppelter Netzfrequenz in der Zwischenkreisspannung, der Momentanleistung, des Wirkstroms, des Blindstroms usw. Solche Größen sind bekanntlich einfach mit Hilfe eines Bandpasses und einer Schwellwertüberwachung des Bandpass-Ausgangs auswertbar.

Bei einer nochmals weiteren Ausführungsform des Verfahrens wird das Gegensystem bei einer einen vorgegebenen oder vorgebbaren Schwellwert überschreitenden mittleren Leistungsaufnahme des Umrichters deaktiviert. Ein solches Deaktivieren der Gegensystemregelung kann zum Beispiel sinnvoll sein, um die Stabilität der Gesamtregelung bei hoher Leistung zu erhöhen oder um die Rechenlast zu reduzieren.

Die oben genannte Aufgabe wird auch mit einer als Umrichtersteuereinheit fungierenden Steuereinrichtung zur Ansteuerung eines Umrichters gelöst, die nach dem Verfahren wie hier und im Folgenden beschrieben arbeitet und dazu Mittel zur Durchführung des Verfahrens umfasst. Die Erfindung ist dabei bevorzugt in Software oder in Soft- und Firmware implementiert. Die Erfindung ist damit einerseits auch ein Computerprogramm mit durch einen Computer ausführbaren Programmcodeanweisungen und andererseits ein Speichermedium mit einem derartigen Computerprogramm, also ein Computerprogrammprodukt mit Programmcodemitteln, sowie schließlich auch eine Umrichtersteuereinheit, in deren Speicher als Mittel zur Durchführung des Verfahrens und seiner Ausgestaltungen ein solches Computerprogramm geladen oder ladbar ist. Wenn im Folgenden Verfahrensschritte oder Verfahrensschrittfolgen beschrieben werden, bezieht sich dies auf Aktionen, die automatisch aufgrund eines solchen Computerprogramms oder automatisch unter Kontrolle des Computerprogramms erfolgen.

Anstelle eines Computerprogramms mit einzelnen Programmcodeanweisungen kann die Implementierung des hier und im Folgenden beschriebenen Verfahrens auch in Form von Firmware erfolgen. Dem Fachmann ist klar, dass anstelle einer Implementation eines Verfahrens in Software stets auch eine Implementation in Firmware oder in Firm- und Software oder in Firm- und Hardware möglich ist. Daher soll für die hier vorgelegte Beschreibung gelten, dass von dem Begriff Software oder dem Begriff Computerprogramm auch andere Implementationsmöglichkeiten, nämlich insbesondere eine Implementation in Firmware oder in Firm- und Software oder in Firm- und Hardware, umfasst sind.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen.

Das Ausführungsbeispiel ist nicht als Einschränkung der Erfindung zu verstehen. Dies gilt besonders angesichts der Beschreibung auf Basis eines Netzfehlers. Wie eingangs erwähnt kommt der Ansatz genauso für motorseitige Umrichter in Betracht. Dies ist im Folgenden stets mitzulesen. Darüber hinaus sind im Rahmen der vorliegenden Offenbarung durchaus auch Ergänzungen und Modifikationen möglich, insbesondere solche, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten / Verfahrensschrittfolgen führen.

Es zeigen
- FIG 1: ein System mit einem Umrichter,
- FIG 2: eine andere Darstellung des Systems gemäß FIG 1 mit weiteren Details,
- FIG 3: Graphen charakteristischer Größen des Systems gemäß FIG 1, FIG 2,
- FIG 4: ein System gemäß FIG 1, FIG 2 mit einer Umrichtersteuereinheit und
- FIG 5: Graphen charakteristischer Größen des Systems gemäß FIG 4.

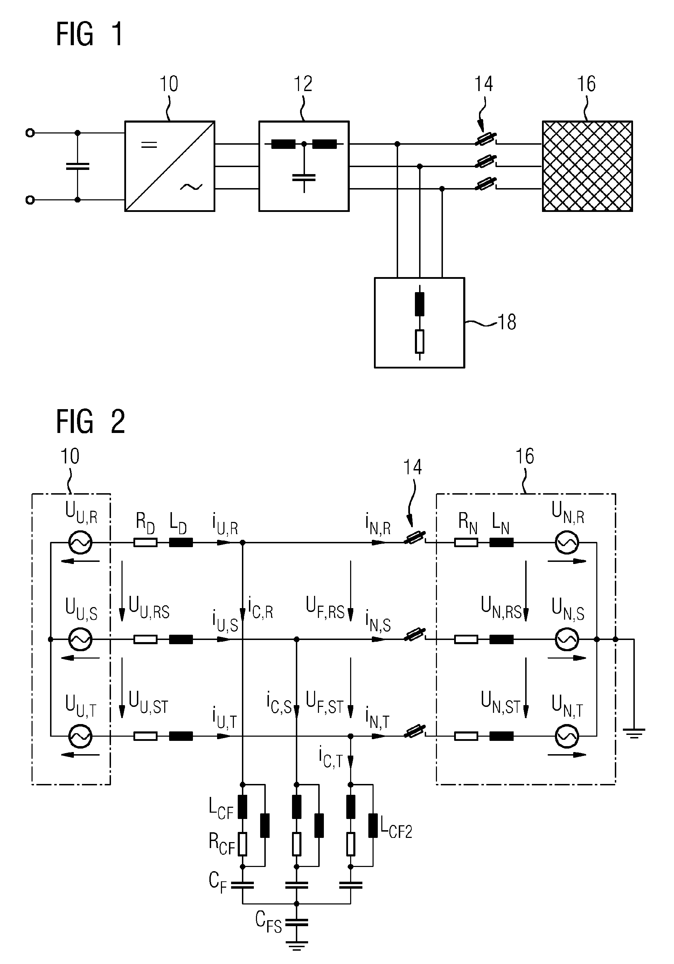

Die Darstellung in FIG 1 zeigt vereinfacht ein System (Umrichterverband) mit einem im Folgenden mitunter kurz als Wechsel-, Strom- oder Umrichter 10 bezeichneten Netzwechselrichter 10, mit einem Netzfilter 12 mit Kommutierungsdrossel (Längsinduktivität) sowie einem Filter-Querzweig mit einem Kondensator (Querkapazität) sowie mit Anschlussleitungen mit Trennstellen 14 zu einem speisenden Netz 16, an das ggf. auch weitere Komponenten 18 angeschlossen sind. Eingangs ist bereits ausgeführt worden, dass der hier vorgeschlagene Ansatz auch auf motorseitige Wechselrichter übertragbar ist. Dafür wäre die hier als Netz 16 bezeichnete Einheit als Motor aufzufassen.

Die Darstellung in FIG 2 zeigt vereinfacht das System gemäß FIG 1 mit weiteren Details, nämlich der gepulsten / geschalteten, insbesondere pulsweitenmodulierten Ausgangsspannung *U_{U}* des Umrichters 10 sowie Kommutierungsdrossel, Netzfilter-Querzweig mit Kondensator und eventuellen weiteren Komponenten 18 (hier zudem mit Erdung des Sternpunkts), Anschlusspunkt mit Trennstelle 14, konzentrierte Netzinduktivität und ideale Netzspannungsquelle *U_{N}*. Ein hochohmiger Netzausfall wird durch einphasiges Öffnen an der Trennstelle 14 zwischen Netzfilter 12 und Netzinduktivität nachgebildet. Abhängig vom Design des Netzfilters 12 kann statt oder zusätzlich zur Verdrosselung des Filter-Querzweigs auch eine Induktivität zwischen Querzweig und Trennstelle vorhanden sein.

Anhand der Schaltung gemäß FIG 2 kann die der Erfindung zugrunde liegende Problemstellung einfach verdeutlicht werden: Da der Umrichter 10 auf cos ϕ =1 am Anschlusspunkt an das Netz 16 (Trennstelle 14) regelt, gilt im Leerlauf (*P_{Wirk}* ≈ 0) näherungsweise, dass der Umrichter-Strom gleich dem Filterstrom ist. Dann gilt *i_{U,RST}* ≈ *i_{C,RST}* und *i_{N,RST}* ≈ 0. Offenbar wird dieser Grenzfall nicht exakt erreicht, da zumindest die Eigenverluste innerhalb des Systems aus dem Netzstrom *i_{N,RST}* gedeckt werden müssen. Dennoch wird einsichtig, dass eine geöffnete Phase im Leerlauf nur geringe Auswirkungen auf die Strom- und Spannungsverhältnisse am Umrichter 10 hat.

Die Erkennung eines hochohmigen Ausfalls einer Netzphase soll auch ohne Messung der Filterspannungen *u_{F,RS}* und *U_{F,ST}* funktionieren, da eine dafür erforderliche geräteexterne Spannungsmessung bei kleinen Umrichtern 10 aus Kostengründen in der Regel nicht verbaut ist. Doch selbst wenn diese Messgrößen verfügbar wären, wäre dies wenig hilfreich: Die Kondensatorspannung an einem hochohmigen Netzzweig wird näherungsweise dem Grundschwingungsverlauf der entsprechenden Umrichter-Ausgangsspannung folgen und somit keine sichere Zustandserkennung gewährleisten. Dies gilt zumindest, solange der Umrichter 10 im pulsenden Betrieb als Spannungsquelle wirkt. Unter Pulssperre (der IGBT-Wechselrichter arbeitet dann lediglich als Dioden-Gleichrichter) wäre die fehlende Netzspannung hingegen eindeutig messbar.

Je größer die momentane Scheinleistung des Umrichterverbands ist, desto größere Abweichungen von Strom und Spannung gegenüber einem erwarteten Verlauf ergeben sich offenbar. Dies macht verständlich, weshalb mit den heute bereits implementieren Überwachungen (Abweichung des Netzphasenwinkels vom erwarteten Verlauf, Abweichung des Wirkstroms und der Zwischenkreisspannung vom erwarteten Verlauf) oberhalb einer Teillastschwelle eine Phasenausfallerkennung gewährleistet ist.

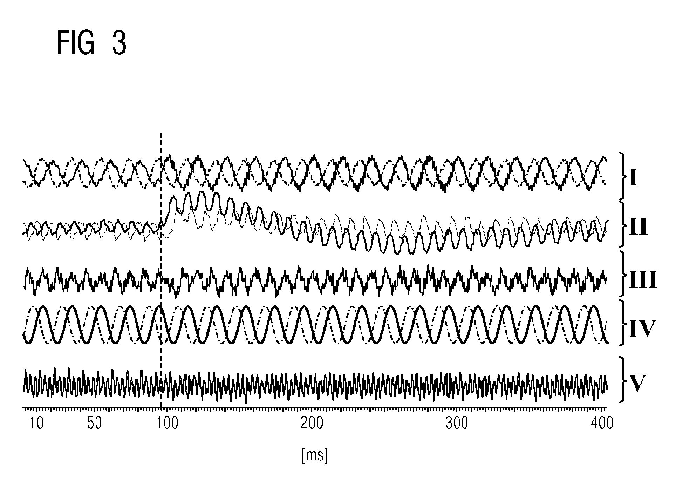

Die Darstellung in FIG 3 zeigt zur Verdeutlichung der zugrunde liegenden Problematik eine Messung an einem realen Testaufbau und zwar von oben nach unten die Phasenströme zwischen Umrichter 10 (Active-Line-Module; ALM) und Netzfilter 12 (Abschnitt I), die Integralanteile von Wirk- und Blindstromregler (Abschnitt II), die Zwischenkreisspannung V_{DC} (Abschnitt III), die gemessenen Filterspannungen *u_{F,RS}* und *u_{F,ST}* (Abschnitt IV) sowie den Aussteuergrad, also die Ausgangsspannung des Umrichters 10 bezogen auf die Zwischenkreisspannung (Abschnitt V). Zum Zeitpunkt t = 96ms wird die Phase S aufgetrennt, also die Größe *i_{N},_{S}* =0 geschaltet. Da der Blindstrombedarf des Netzfilters 12 vom Umrichter 10 eingeprägt wird und somit auch die anderen Netzströme *i_{N,R}* und *i_{N,T}* sehr klein sind, ergeben sich keine signifikanten Änderungen von Systemgrößen, die für eine robuste Erkennung der Netzstörung verwendbar wären. Dies gilt speziell auch für die Filterspannungen *u_{F,RS}* und *u_{F,ST}* sowie die Phasenströme *i_{U,R}, i_{U,S}* und *i_{U,T}* des Umrichters 10. Zumindest Letztere stehen in der Regel als Messgrößen zur Verfügung; die Filter- bzw. Netzspannungen werden in vielen Anwendungen mit Hilfe von Modellen lediglich berechnet.

Der hier vorgeschlagene Ansatz nutzt die Methode der Zerlegung eines Drehstromsystems in symmetrische Komponenten. Dieser mathematische Ansatz besagt, dass ein dreiphasiges Spannungs- / Strom-System mit beliebigen, also auch ungleichen Amplituden in mehrere Spannungs- / Strom-Quellen zerlegt werden kann, die jeweils die gleiche Amplitude in allen drei Zweigen aufweisen (also symmetrisch sind). Die Aufteilung erfolgt in ein Nullsystem, das in allen drei Zweigen ohne gegenseitige Phasenverschiebung gleich wirkt, sowie zwei Drehspannungs- / Strom-Systeme mit jeweils 120° Phasenverschiebung zwischen den Zweigen, die einen positiven Drehsinn (Mitsystem 20) bzw. einen negativen Drehsinn (Gegensystem 22) besitzen.

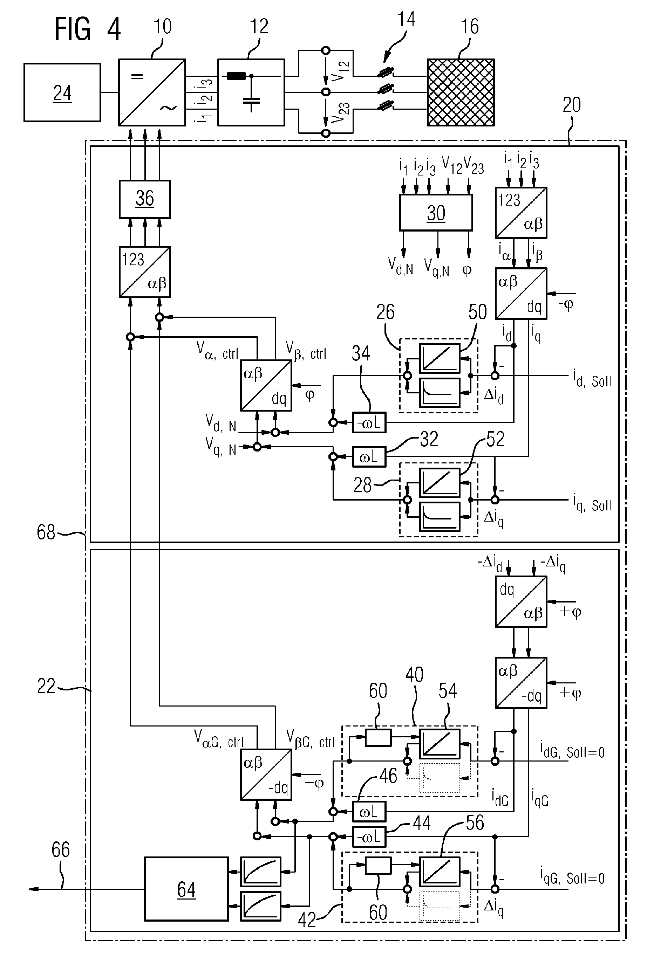

Die Darstellung in FIG 4 zeigt eine Ausführungsform des Umrichterverbands gemäß FIG 1, FIG 2 mit einer Zwischenkreisspannungsquelle 24 sowie einem Mitsystem 20 und einem Gegensystem 22.

Im Normalfall gleicher Amplituden in den drei Leitern und 120°-Phasenverschiebung zwischen den Leitergrößen ist ausschließlich das Mitsystem 20 ungleich 0. Das bedeutet, dass für eine Anwendung in regulären symmetrischen Netzen eine Stromregelung genügt, welche die Ströme im Mitsystem 20 (also in der vom Netz 16 vorgegebenen Phasenfolge) einprägt.

Dementsprechend besitzen die Stromregelungen von Umrichtern typisch nur eine Regelschleife für das Mitsystem 20 mit einem d-Stromregler 26 sowie einem q-Stromregler 28. Mit Hilfe eines Netzmodells 30 oder einer PLL werden aus gemessenen Strömen und/oder Spannungen der aktuelle Netzphasenwinkel ϕ sowie die aktuelle Netzspannung *v_{d,N}, v_{q,N}* zum Vorsteuern der Umrichter-Ausgangsspannung berechnet. Durch Transformation der drei Phasenströme in αβ-Raumzeiger-Koordinaten wird eine eindeutige Abbildung in zwei Achsen erreicht (Clarke-Transformation). Eine weitere Transformation durch Rotation mit dem Netzphasenwinkel ϕ in d/q-Koordinaten (Park-Transformation) ermöglicht den Einsatz stationärer Regelungen mit Integratoranteil, zum Beispiel in Form eines PI-Reglers oder eines PID-Reglers, zum Erhalt stationärer Genauigkeit.

Entkopplungsblöcke 32, 34 kompensieren die Verkopplung der beiden Raumzeigerachsen, die durch die Vektorrotation ins d-q-System entsteht. Der Spannungs-Ausgangsvektor der Regelung wird mit Hilfe eines Modulators 36 in Schaltbefehle für die Halbleiterschalter des Umrichters 10 umgerechnet. Im zeitlichen Mittel über eine Schaltperiode ergibt sich durch die Schalthandlungen am dreiphasigen Umrichterausgang gerade die vom Regler 26, 28 berechnete Ausgangsspannung. Der Netz- / Sinusfilter 12 (typisch in L-C oder in L-C-L-Struktur ausgeführt) glättet die schnellen schaltfrequenten Spannungsänderungen (typisch im kHz-Bereich) am Umrichterausgang so, dass am Verknüpfungspunkt mit dem Netz 16 (Trennstelle 14) näherungsweise sinusförmige Signalverläufe entstehen, deren Oberschwingungsanteil innerhalb der gültigen Richtlinien und Normen liegt.

Von Bedeutung für die Anwendbarkeit des hier vorgeschlagenen Verfahrens ist, dass die d-q-Stromregler 26, 28 einen Integralanteil, also eine einfache Polstelle bei s=0 oder sehr nahe am Ursprung der komplexen s-Frequenzebene, aufweisen (für digitale Regler liegt der entsprechende Punkt bei z=1). Aus der Systemtheorie ist bekannt, dass solche Übertragungsglieder stabil sind und nicht über alle Grenzen anwachsen solange die Eingangsgröße, also die Regelabweichung, keinen stationären Gleichanteil aufweist. Die d- und q-Achse der Regelung bilden orthogonale Komponenten, sind daher entkoppelt und voneinander unabhängig regelbar. Dies erklärt, weshalb die Regler 26, 28 für beide Achsen jeweils einen Integrator enthalten können und der Regelkreis dennoch stabil ist.

Zum Zweck der aktiven Phasenausfallerkennung wird die klassische Stromregelung um einen Regelungsblock für das Gegensystem 22 mit eigenen Stromreglern 40, 42 ergänzt: Die Sollwerte für den Gegensystemstrom werden üblicherweise zu 0 gesetzt. Die Stromistwerte des Gegensystemstroms bilden als Regelabweichung die Eingangswerte für die zwei Achsen der Gegensystemregler 40, 42. Im Ausführungsbeispiel werden diese Istwerte effizient dadurch berechnet, dass die Strom-Regelabweichung Δ*i_{d}*, Δ*i_{q}* aus dem Mitsystem 20 durch zweifache Vektorrotation mit dem Phasenwinkel ϕ (oder durch eine einfache Vektorrotation mit dem doppelten Phasenwinkel) in das d-q-Koordinatensystem des Gegensystems 22 gedreht wird (entsprechend einem entgegengesetzt orientierten Strom- / Spannungssystem). Vorteilhaft ist dabei, dass der in der Regel dominante Grundschwingungsanteil des Mitsystems 20 bereits näherungsweise herausgerechnet wurde, da der Mitsystem-Sollwert abgezogen wurde. Alternativ könnten die Stromistwerte des Mit- und Gegensystems 20, 22 beispielsweise jeweils durch Bandpass-Filter aus *i_{α}* und *i_{β}* extrahiert werden. Von null verschiedene Gegensystemströme bilden sich im Mitsystem 20 als Schwingung mit doppelter Netzfrequenz ab (und umgekehrt).

Entscheidend für die Funktion des Verfahrens ist, dass die d-q-Gegensystem-Stromregler 40, 42 ebenfalls Integralanteile (also Polstellen bei s=0 bzw. z=1) aufweisen. Zusätzlich proportional oder differentiell wirksame Reglerglieder dürfen vorhanden sein, sind jedoch nicht notwendig. Insoweit kommt bevorzugt in Betracht, im Gegensystem 22 einen reinen Integralregler vorzusehen, da das P-(D-)Glied des Mitsystemreglers 26, 28 für den gesamten Frequenzbereich wirksam ist. Wie im Mitsystem 20 wird auch im Gegensystem 22 ein Entkopplungsblock 44, 46 ergänzt. Die Gesamtausgangsspannung resultiert aufgrund einer Addition der Ausgangsspannung der Gegensystemregler 40, 42 und der Ausgangsspannung der Mitsystemregler 26, 28.

Im störungsfreien symmetrischen System bilden die Umrichterströme im Mitsystem 20 und im Gegensystem 22 orthogonale Komponenten. Diese sind entkoppelt und können unabhängig voneinander geregelt werden. Die Integratoren 50, 52; 54, 56 der Regler 26, 28; 40, 42 des Mitsystems 20 und des Gegensystems 22 sind daher ebenfalls entkoppelt und führen nicht gegenseitig zu einem Aufklingen. Das Auftrennen einer Netzphase führt hingegen zu einer Strukturänderung des Systems, die eine Verkopplung von Mit- und Gegensystem 20, 22 bewirkt. Im kombinierten Gesamtsystem von Mit- und Gegenströmen ergeben sich entsprechend mehrfache Polstellen auf der imaginären Achse und somit eine Instabilität, die zu einem einfach detektierbaren Anwachsen der Integralanteile führt. Es lässt sich zeigen, dass die Integratoren von Mit- und Gegensystem 20, 22 bei Netzphasentrennung gegeneinander arbeiten, also eine positive Rückkopplung entsteht.

Bevorzugt wird man die Integratoren nicht so weit ansteigen lassen, dass es zu einem Ausfall durch Überstrom oder Überspannung kommt. Daher ist vorgesehen, die Integralanteile nur so weit ansteigen zu lassen, bis eine Alarmschwelle für eine eindeutige Detektion überschritten ist und eine Meldung an eine übergeordnete Steuerung oder das Bedienpersonal erfolgen kann. Mit Hilfe von Begrenzungsblöcken 60, 62 oder Anti-Windup-Rückführungen auf die Integratoren 54, 56 der d-q-Gegensystem-Stromregler 40, 42 wird ein unbegrenztes Ansteigen der Gegensystem-Integratoren verhindert und ein stabiler Betrieb aufrechterhalten. Beispielsweise könnte die Erkennungsschwelle für das Gegensystem 22 sinnvoll auf 20% der Nennanschlussspannung gelegt werden. Applikationsspezifisch kann bei Erreichen oder Überschreiten der Erkennungsschwelle ein Notrückzug des Werkzeugs der Werkzeugmaschine oder auch ein robustes Durchfahren des Netzfehlers realisiert werden.

Der hier vorgeschlagene Ansatz basiert damit darauf, dass eine übliche Stromregelung für einen Umrichter 10 mit Integratoren für die Ausregelung von Real- und Imaginärteil des Mitsystemstroms ohne bleibende Regelabweichung um ein Gegensystem 22, welches selbst Stromregler 40, 42 mit Integratoren umfasst, ergänzt wird. Die Stromregler 40, 42 des Gegensystems 22 sind zur Ausregelung des komplexen Gegensystemstroms bestimmt. Die von den Stromreglern 40, 42 umfassten Integratoren gewährleisten die Ausregelung des komplexen Gegensystemstroms ohne bleibende Regelabweichung. Eine derartige Umrichter-Regelung wird für symmetrische Regelstrecken normalerweise nicht benötigt, da hier keine oder nur geringe Anregungen im Gegensystem 22 vorhanden sind und Ströme und Spannungen im Gegensystem 22 klein bleiben. Von Ausnahmen abgesehen wird der Sollwert für den komplexen Gegensystemstrom zu 0 gesetzt. Auch im ungestörten symmetrischen System haben die Gegensystemregelung und speziell deren Integratoren eine vernachlässigbare Wirkung auf die zu regelnde Strecke. In einem gestörten System, also einem System mit einer aufgrund eines hochohmigen Ausfalls einer Netzphase resultierenden Trennstelle 14, wirken die Integratoren des Gegensystems 22 als zunächst kleine, aber stetig größer werdende Störung im Gesamtsystem, die eine einfache Detektierung der Störung zulässt.

Zur Detektierung der Störung ist eine Überwachungseinheit 64 vorgesehen. Diese ist dafür bestimmt und eingerichtet, signifikante Mess- und/oder Rechengrößen auf einen im Störfall typischen Verlauf zu prüfen. Ein im Störfall typischer Verlauf einer Mess- oder Rechengröße ist zum Beispiel die Überschreitung eines vorgegebenen oder vorgebbaren Grenzwerts. Mess- oder Rechengrößen, die alternativ oder kumulativ zur Überwachung mittels der Überwachungseinheit 64 in Betracht kommen, sind zum Beispiel
- die Absolutwerte der Integratoren der Gegensystemregelung,
- die Schwingungsamplitude des Netzstrombetrags bei zweifacher Netzfrequenz,
- die Schwingungsamplitude des Filterspannungsbetrags bei zweifacher Netzfrequenz,
- die Schwingungsamplitude der Zwischenkreisspannung bei zweifacher Netzfrequenz oder
- die Schwingungsamplitude des Aussteuergrads bei zweifacher Netzfrequenz.

Bei dem in FIG 4 gezeigten Ausführungsbespiel werden mittels der Überwachungseinheit 64 die Absolutwerte der Integratoren der Gegensystemregelung überwacht. Bei der gezeigten Situation werden die Absolutwerte der Integratoren mittels grundsätzlich optionaler, der Überwachungseinheit 64 vorgeschalteter PT1-Glieder tiefpassgefiltert. Wenn einer der Absolutwerte oder beide Absolutwerte einen vorgegebenen oder vorgebbaren Grenzwert überschreiten, wird dies in grundsätzlich an sich bekannter Art und Weise mittels der Überwachungseinheit 64 erkannt und mittels der Überwachungseinheit 64 zum Beispiel ein Fehlersignal 66 generiert.

Auf Basis eines solchen Fehlersignals 66 kann in Abhängigkeit von den Anforderungen der jeweiligen Anwendung eine Meldung wie zum Beispiel "(Netz-)Phasenausfall erkannt" für das Bedienpersonal erzeugt werden. Mittels einer Auswertung des Fehlersignals 66 durch eine übergeordnete Steuerung (nicht gezeigt) kann automatisch eine geeignete Reaktion im jeweiligen Prozess ausgelöst werden, z.B. ein Stopp, eine Rückzugsbewegung, eine Ausführung eines Notprogramms, eine Weiterleitung der Information an übergeordnete Kontrollstrukturen etc.

Eine Implementation der in FIG 4 gezeigten Funktionseinheiten, nämlich zumindest des Mitsystems 20 und des Gegensystems 22, fungiert als Umrichtersteuereinheit 68. Das Mitsystem 20 und das Gegensystem 22 sind dabei zum Beispiel in Software, also als Computerprogramm implementiert. Insoweit umfasst die Umrichtersteuereinheit 68 eine hier nicht gezeigte, an sich bekannte Verarbeitungseinheit in Form von oder nach Art eines Mikroprozessors sowie einen ebenfalls nicht gezeigten Speicher. In den Speicher ist das Computerprogramm mit der Implementation des Mitsystems 20 und des Gegensystems 22 geladen und beim Betrieb der Umrichtersteuereinheit 68 wird das Computerprogramm mittels der Verarbeitungseinheit ausgeführt, so dass eine Ausführung des hier beschriebenen Ansatzes resultiert.

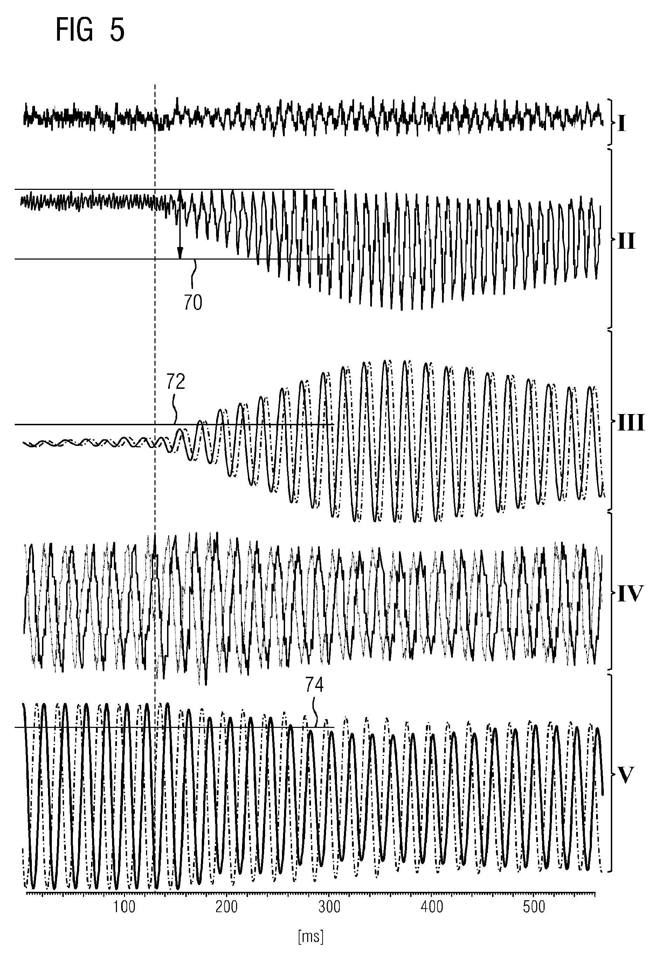

Die Darstellung in FIG 5 zeigt abschließend die gleiche Situation wie zuvor in FIG 3, jedoch bei Verwendung des hier vorgeschlagenen Detektionssystems in Form des Gegensystems 22 mit den dortigen Reglern 40, 42. Gezeigt ist in einem ersten oberen Abschnitt die Zwischenkreisspannung V_{DC} (Abschnitt I). Darunter folgt der Aussteuergrad, also die Ausgangsspannung des Umrichters 10 bezogen auf die Zwischenkreisspannung (Abschnitt II). Wiederum darunter ist der Verlauf der Stellgrößen α und β der Gegensystemregelung gezeigt (Abschnitt III), die durch Drehung mit dem 50 Hz-Netzwinkel ϕ aus den stationären d/q-Regelgrößen (in denen auch die Integralanteile arbeiten) entstehen. Aus den Gleichanteilssignalen der Integralanteile entsteht somit die gezeigte 50 Hz-Schwingung. Die momentane Amplitude der Schwingung korrespondiert mit dem momentanen Integralwert. In einem darunter nachfolgenden Abschnitt sind die Phasenströme *i_{R}* und *i_{S}* zwischen Umrichter 10 und Netzfilter 12 (Abschnitt IV) aufgetragen und in einem letzten Abschnitt sind die gemessenen Filterspannungen *u_{F,RS}* und *u_{F,ST}* (Abschnitt V) gezeigt.

Die 1-Anteile der Regler 40, 42 für den Gegensystemstrom sorgen für ein Verschieben des nicht mehr geklemmten Potentials an der getrennten Phase - wie zuvor der Phase S. Indem an der Trennstelle 14 die Leitung der Phase S nicht mehr mit dem Netz 16 verbunden ist (nicht mehr an die Netzspannung geklemmt ist), können sich die Spannungen *u_{F,RS}* und *u_{F,ST}* ändern. Zwar wurde im Beispiel keine Störabschaltung ausgeführt, jedoch ist die Netzstörung einfach detektierbar, z.B. aufgrund der Ausgangs-Amplitude der Gegensystemregelung oder auch aufgrund der netzsynchronen Schwankung des Aussteuergrads. Die Filterspannungs-Amplituden ändern sich ebenfalls signifikant, erfordern jedoch die Messung einer externen Spannung. Bei der in FIG 5 gezeigten Situation eines Tests an einem 400V-Netz folgt, dass die Schwingungsamplitude bei 564V liegt, die kleinere (zum Betrachtungszeitpunkt kleinere) Amplitude der Spannungen *u_{F,RS}* und *u_{F,ST}* sinkt mit der Gegensystemreaktion auf ca. 400V, also um ca. 30% ab. Das liegt deutlich außerhalb der normalen Netzspannungstoleranz von -15%.

In der Darstellung in FIG 5 sind insoweit exemplarisch einzelne mittels der Überwachungseinheit 64 einzeln und/oder kumulativ überwachbare Grenzwerte 70, 72, 74 eingezeichnet, nämlich ein Grenzwert 70 für die Schwingungsamplitude des Aussteuergrads bei doppelter Netzfrequenz (Abschnitt II), ein Grenzwert 72 für die Höhe eines der beiden Integratoren (korrespondierend mit der Amplitude der Gegensystemschwingung; Abschnitt III) und ein Grenzwert 74 für einen Mindestwert für die Amplitude einer/jeder verketteten Netzspannung (Abschnitt V).

Das Erreichen oder Über- oder Unterschreiten eines solchen Grenzwerts 70, 72, 74 ist ein für die erwähnte Verkopplung der Integratoren 50, 52; 54, 56 typischer Verlauf. Indem die Überwachungseinheit 64 die jeweiligen Mess- oder Rechengrößen überwacht und die Grenzwertverletzung als einen für die Verkopplung der Integratoren 50, 52; 54, 56 typischen Verlauf erkennt, ist mittels der Überwachungseinheit 64 der zugrunde liegende Netzfehler automatisch erkannt worden. Zur Signalisierung des erkannten Netzfehlers generiert die Überwachungseinheit 64 das Fehlersignal 66.

Obwohl die Erfindung im Detail durch das Ausführungsbeispiel näher illustriert und beschrieben wurde, so ist die Erfindung nicht durch das oder die offenbarten Beispiele eingeschränkt und andere Variationen können vom Fachmann hieraus abgeleitet werden, ohne den Schutzumfang der Erfindung zu verlassen.

Einzelne im Vordergrund stehende Aspekte der hier eingereichten Beschreibung lassen sich damit kurz wie folgt zusammenfassen: Zur Erkennung von Phasenausfällen, insbesondere Phasenausfällen in Form von Netzfehlern, wird ein aktives Erkennungsverfahren vorgeschlagen, das gezielt Zustandsänderungen im aufgrund des Phasen- / Netzfehlers gestörten System bewirkt, um signifikante und detektierbare Signaländerungen zu erhalten und durch Schwellwertvergleiche den gestörten Zustand auch bei Leerlauf zu erkennen. Das aktive Verfahren ist so beschaffen, dass im ungestörten Betriebszustand praktisch keine Verhaltensänderung des Systems erfolgt. Speziell werden keine dedizierten Testsignale in das Netz 16 ausgesendet, die eine Abweichung vom idealen Verlauf der Ausgangsspannung darstellen würden und somit unerwünschte Netzrückwirkungen bilden würden. Stattdessen wird die Regelung des Umrichters 10 so implementiert, dass im Falle eines zu erkennenden Phasenausfalls / Netzfehlers (Phasenunterbrechung) eine Strukturänderung der Regelung resultiert. Diese führt dazu, dass im normalen Betrieb nicht miteinander verkoppelte Funktionseinheiten (Integratoren der Stromregler 26, 28; 40, 42) verkoppelt werden und sich Rückkopplungsschleifen ergeben, die erst dann zu einem stetig anwachsenden und automatisch detektierbaren Störsignal führen, wenn aufgrund des Phasen- / Netzfehlers die Strukturänderung eintritt.

## Patentansprüche

1. Verfahren zur Erkennung von Phasenausfällen bei einem Umrichter (10),
wobei zur Stromregelung des Umrichters (10) einerseits Stromregler (26, 28) eines Mitsystems (20) und andererseits Stromregler (40, 42) eines Gegensystems (22) vorgesehen sind,
wobei die Stromregler (26, 28) des Mitsystems (20) und die Stromregler (40, 42) des Gegensystems (22) jeweils Integratoren (50, 52; 54, 56) aufweisen,
wobei im Falle eines Netzfehlers eine Verkopplung der Integratoren (50, 52; 54, 56) resultiert,
wobei zumindest eine Mess- oder Rechengröße mittels einer Überwachungseinheit (64) auf einen für die Verkopplung der Integratoren (50, 52; 54, 56) typischen Verlauf geprüft wird und
wobei die Überwachungseinheit (64) im Falle einer Erkennung eines solchen typischen Verlaufs ein Fehlersignal (66) generiert.

2. Verfahren nach Anspruch 1, wobei mittels der Überwachungseinheit (64) die Absolutwerte der Integratoren (54, 56) der Stromregler (40, 42) des Gegensystems (22) in Bezug auf eine Überschreitung eines vorgegebenen oder vorgebbaren Grenzwerts überwacht werden und die Überwachungseinheit (64) das Fehlersignal (66) im Falle einer Grenzwertüberschreitung generiert.

3. Verfahren nach Anspruch 1 oder 2, wobei das Gegensystem (22) den Integratoren (54, 56) zugeordnete Begrenzungsblöcke (60, 62) aufweist, welche einen unbegrenzten Anstieg der Integratoren (54, 56) verhindern.

4. Verfahren nach einem der vorangehenden Ansprüche, wobei das Gegensystem (22) abhängig von einer mittleren Leistungsaufnahme des Umrichters (10) aktiviert wird.

5. Verfahren nach einem der vorangehenden Ansprüche, wobei das Gegensystem (22) bei einer einen vorgegebenen oder vorgebbaren Schwellwert überschreitenden mittleren Leistungsaufnahme des Umrichters (10) deaktiviert wird.

6. Verfahren nach einem der vorangehenden Ansprüche, wobei die Stromregler (40, 42) des Gegensystems (22) als Eingangswerte eine durch Vektorrotation in das Koordinatensystem des Gegensystems (22) gedrehte Strom-Regelabweichung aus dem Mitsystem (20) verarbeiten.

7. Vorrichtung zur Erkennung von Phasenausfällen bei einem Umrichter (10),
wobei zur Stromregelung des Umrichters (10) einerseits Stromregler (26, 28) eines Mitsystems (20) und andererseits Stromregler (40, 42) eines Gegensystems (22) vorgesehen sind und
wobei die Stromregler (26, 28) des Mitsystems (20) und die Stromregler (40, 42) des Gegensystems (22) jeweils Integratoren (50, 52; 54, 56) aufweisen,
wobei im Falle eines Netzfehlers eine Verkopplung der Integratoren (50, 52; 54, 56) resultiert,
wobei mittels einer Überwachungseinheit (64) ein für die Verkopplung der Integratoren (50, 52; 54, 56) typischer Verlauf zumindest einer Mess- oder Rechengröße detektierbar ist und
wobei mittels der Überwachungseinheit (64) im Falle einer Erkennung eines solchen typischen Verlaufs ein Fehlersignal (66) generierbar ist.

8. Computerprogramm mit Programmcodemitteln, um alle Schritte von jedem beliebigen der Ansprüche 1 bis 6 durchzuführen, wenn das Computerprogramm mittels einer Umrichtersteuereinheit (68) ausgeführt wird.

9. Vorrichtung nach Anspruch 7 mit einer eine Verarbeitungseinheit und einen Speicher aufweisenden Umrichtersteuereinheit (68), wobei in den Speicher der Umrichtersteuereinheit (68) ein Computerprogramm nach Anspruch 6 geladen ist und wobei bei einer Ausführung des Computerprogramms mittels der Verarbeitungseinheit eine Ausführung eines Verfahren nach einem der Ansprüche 1 bis 6 resultiert.
